# EUROPÄISCHE PATENTSCHRIFT

(11) **EP 3 505 875 B1**
(45) Veröffentlichungstag und Bekanntmachung des Hinweises auf die Patenterteilung: **05.08.2020**
(21) Anmeldenummer: 18212468.5
(22) Anmeldetag: 13.12.2018
(51) Int. Cl.: G01F 1/66

(54) **ULTRASCHALL-DURCHFLUSSMESSVORRICHTUNG MIT STRÖMUNGSOPTIMIERTEM MESSROHR**
ULTRASOUND FLOW METER WITH FLOW-OPTIMISED MEASURING TUBE
DISPOSITIF DE MESURE DE DÉBIT À ULTRASONS POURVU DE TUBE DE MESURE OPTIMISÉ DU POINT DE VUE DE L'ÉCOULEMENT

(30) Priorität: 14.12.2017 CH 15242017
(43) Veröffentlichungstag der Anmeldung: 03.07.2019
(73) Patentinhaber: Stebatec AG, 2555 Brügg (CH)
(72) Erfinder: HESSE, Kilian, 2555 Brügg (CH)
(74) Vertreter: Office Freylinger

(56) Entgegenhaltungen:
- EP-A1- 2 722 654
- WO-A1-2017/002281
- DE-A1- 19 632 165
- DE-A1-102014 009 581
- DE-B3-102015 105 685
- KR-A- 20170 109 506

## Beschreibung

### Technisches Gebiet

Die vorliegende Erfindung betrifft eine Ultraschall-Durchflussmessvorrichtung nach dem Oberbegriff des Anspruchs 1, beinhaltend ein Messrohr mit einer Rohrwandung, die eine Rohrquerschnittsfläche aufweist, und eine Vielzahl von Ultraschallsensoren.

### Stand der Technik

Auf dem Gebiet der Messung des Durchflusses eines strömenden Mediums, das beispielsweise in einem Gerinne, einer teilgefüllten oder einer vollständig gefüllten Rohrleitung fliesst, ist der Einsatz von Durchflussmessern bekannt, bei denen in einem Messrohr angebrachte Ultraschallsensoren verwendet werden, um, etwa nach dem an sich bekannten Doppler-Prinzip oder dem Prinzip der Laufzeitdifferenz, eine Geschwindigkeit des strömenden Mediums zu bestimmen. Aus der bestimmten Geschwindigkeit und der bekannten Geometrie des Messrohres kann nach Ermittlung einer Füllhöhe des Mediums im Messrohr eine Durchflussmenge berechnet werden.

Bei einigen der bekannten Durchflussmesser ist zumindest ein Ultraschallsensor in einer speziell dafür vorgesehenen Vertiefung in einer Innenwand des Messrohres positioniert, die mit dem Messrohr in strömungstechnischer Verbindung steht. Bei derartigen Durchflussmessern ist bekannt, dass durch die Vertiefung eine Störung in der räumlichen Geschwindigkeitsverteilung des strömenden Mediums, etwa durch die Bildung von Wirbeln, erzeugt wird. Die Störung der räumlichen Geschwindigkeitsverteilung führt zu einem systematischen Messfehler bei der Durchflussmessung, da eine bei der Berechnung der Durchflussmenge vorausgesetzte Geschwindigkeitsverteilung nicht exakt eingehalten ist.

Im Stand der Technik wurden verschiedene Wege zur Lösung dieses Problems vorgeschlagen. In einem ersten Lösungsweg wird versucht, die Störung der räumlichen Geschwindigkeitsverteilung aufgrund der an der Innenwand des Messrohres angeordneten Ultraschallsensoren durch Einbau geeigneter Vorrichtungen zu verringern.

Beispielsweise wird in der Patentschrift DE 196 48 784 C2 eine Lösung vorgeschlagen, bei der zumindest an Eingangsöffnungen der mit Ultraschallsensoren ausgestatteten Vertiefungen Gitter vorgesehen sind, die Maschen aufweisen, was einerseits zu einer Verringerung der Wirbel führen soll und andererseits zu einer Vergrösserung der Frequenz der noch auftretenden Wirbel, die dadurch unschädlich für die Durchflussmessung sind.

Zudem ist in der internationalen Anmeldung WO 2012/084392 A1 ein Durchflussmesser beschrieben, bei dem in einer Bohrung eines Messrohres, die einen Ultraschallwandler mit Ultraschallfenster aufnimmt, zumindest ein Leitblech in der Bohrung des Messrohres vorgesehen ist. Das Leitblech ist vor dem Ultraschallfenster und senkrecht zum Ultraschallfenster angeordnet, wodurch die Ausbildung von Strömungswirbeln an der Bohrung behindert ist.

Des Weiteren ist in der Offenlegungsschrift DE 10 2014 004 747 A1 an einer Wandlertasche eine zylinderförmige Abschirmung vorgesehen, die vorzugsweise rohrförmig ausgeführt ist und die Ausbildung von Strömungswirbeln reduzieren soll, ohne die Ausbreitung des Ultraschallsignals zu beeinflussen.

In einem weiteren im Stand der Technik bekannten Lösungsweg wird versucht, die Störung der räumlichen Geschwindigkeitsverteilung aufgrund der zur Durchflussmessung verwendeten Ultraschallsensoren durch eine geeignete Ausgestaltung des Messrohres und/oder eine geeignete Anordnung der Ultraschallsensoren im Messrohr zu verringern, um eine möglichst störungsfreie Strömung des Mediums durch das Messrohr zu erreichen.

Beispielsweise ist in der Offenlegungsschrift DE 35 39 948 A1 eine Ultraschall-Durchflussmesseinrichtung mit einem Rohr aus Metall beschrieben, das im Wesentlichen einen rechteckförmigen Innenquerschnitt aufweist. An Seitenwänden des Rohrs auftreffende Ultraschallwellen werden reflektiert, was zu einer Verringerung der Abhängigkeit des Messergebnisses vom Strömungsprofil führt.

Weiterhin beschreibt die europäische Patentschrift EP 2 172 657 B1 einen Strömungsrichter für ein Ultraschall-Durchflussmessgerät. Der Strömungsrichter ist zur Anordnung an einem Eingang eines Messrohres vorgesehen und derart ausgelegt, dass eine laminare Strömung am Eingang des Messrohres verwirbelt wird, während eine turbulente Strömung den Strömungsrichter nahezu ungehindert, d.h. ohne den bekannten unerwünschten Druckverlust, passieren kann.

Einen Ultraschall-Durchflussmesser für Fluide mit einem Messrohr, mit dem ein optimales Geschwindigkeitsprofil erreicht und somit parasitäre Wellen reduziert werden sollen, wird in der europäischen Patentanmeldung EP 1 096 236 A2 vorgeschlagen. Das Messrohr mit ebenen Wänden weist Kammern auf, die in einer dieser Wände eingebaut sind. In den Kammern sind Ultraschallwandler und Reflektoren angeordnet. Durch die Reflexion an den Reflektoren in den Kammern erhält das Schallfeld die gewünschte Form.

In einem weiteren im Stand der Technik bekannten Lösungsweg wird vorgeschlagen, die Störung der räumlichen Geschwindigkeitsverteilung aufgrund der zur Durchflussmessung verwendeten Ultraschallsensoren zu berücksichtigen, indem Fliessgeschwindigkeiten in unterschiedlichen Tiefen eines Strömungsprofils gemessen und die gemessenen Fliessgeschwindigkeiten bei der Bestimmung der Durchflussmenge berücksichtigt werden, anstatt bei der Berechnung der Durchflussmenge eine mittlere Fliessgeschwindigkeit zu unterstellen.

Beispielsweise ist in der Patentschrift DE 196 33 558 C2 ein Ultraschall-Durchflussmessverfahren für strömende Medien beschrieben, bei dem aus einer Doppler-Verschiebung der an in dem strömenden Medium enthaltenen Inhomogenitäten entlang eines Messpfads reflektierten Ultraschallimpulse und der Laufzeit der reflektierten Ultraschallimpulse ein Strömungsprofil des strömenden Mediums bestimmt wird und anhand des so gewonnenen Strömungsprofils der Wert für die mittlere Strömungsgeschwindigkeit korrigiert wird.

DE 10 2015 105685 betrifft ein dreistufiges Verfahren zum Erkennen des Vorhandenseins von Flüssigkeit in einem in einer Rohrleitung strömenden Gasstrom und ein Ultraschalldurchflussmessgerät, mit dem dieses Verfahren durchgeführt wird.

KR 2017 0109506 A offenbart eine Ultraschall-Durchflussmessvorrichtung, wobei ultraschallwandelnde und/oder ultraschallabstrahlfähige Elemente der Ultraschallsensoren mehrheitlich in vertikaler Richtung ausgerichtet und in einer Vielzahl von in der inneren Rohrwandung integrierten Stufen angeordnet sind, wobei Vorderkanten der Stufen in einem zusammenhängenden axialen Bereich, der zumindest eine axiale Abmessung des Ultraschallsensors oder der Ultraschallsensoren umfasst, parallel zu einer Mittelachse des Messrohres verlaufen Obwohl die bekannten Ultraschall-Durchflussmesser und Ultraschall-Durchflussmessverfahren zur Messung des Durchflusses eines strömenden Mediums eine erwünschte Funktion erfüllen, bietet der technische Bereich der Messung von Durchflussmengen eines strömenden Mediums noch Raum für Verbesserungen.

### Aufgabe der Erfindung

Der vorliegenden Erfindung liegt daher insbesondere die Aufgabe zugrunde, einen Ultraschall-Durchflussmesser bereitzustellen, der einen verringertem systematischen Messfehler bei der Bestimmung der Durchflussmenge infolge einer Störung der räumlichen Geschwindigkeitsverteilung des Mediums in dem Durchflussmesser aufweist.

### Allgemeine Beschreibung der Erfindung

Erfindungsgemäss wird die Aufgabe durch mit den Merkmalen des Anspruchs 1 gelöst. Weitere, besonders vorteilhafte Ausgestaltungen der Erfindung offenbaren die abhängigen Unteransprüche.

Die einzelnen Merkmale, die in dieser Beschreibung aufgeführt sind, können auch in beliebiger, technisch sinnvoller Weise miteinander kombinierbar sein und weitere Ausgestaltungen der Erfindung darstellen. Die Beschreibung charakterisiert und spezifiziert die Erfindung insbesondere im Zusammenhang mit den Figuren zusätzlich.

Die erfindungsgemässe Ultraschall-Durchflussmessvorrichtung beinhaltet ein Messrohr mit einer Rohrwandung, die eine Rohrquerschnittsfläche aufweist, und eine Vielzahl von Ultraschallsensoren. Dabei sind ultraschallwandelnde und/oder ultraschallabstrahlfähige Elemente der Ultraschallsensoren mehrheitlich in vertikaler Richtung ausgerichtet und in einer Vielzahl von in der inneren Rohrwandung integrierten Stufen angeordnet. Vorderkanten der Stufen verlaufen in einem zusammenhängenden axialen Bereich, der zumindest eine axiale Abmessung des Ultraschallsensors oder der Ultraschallsensoren umfasst, parallel zu einer Mittelachse des Messrohres, und eine Mehrzahl der Stufen weist zumindest in dem zusammenhängenden axialen Bereich in einer Querschnittsfläche jeweils einen von der Rohrquerschnittsfläche nach innen ragenden Flächenteil und einen von der Rohrquerschnittsfläche nach aussen ragenden Flächenteil auf, deren Flächeninhalte im Wesentlichen betragsmässig übereinstimmen.

Unter dem Begriff "Vielzahl" soll im Sinne der Erfindung insbesondere eine Anzahl von zumindest zwei verstanden werden. Unter dem Begriff "Mehrzahl" soll im Sinne der Erfindung insbesondere ein Anteil von mehr als 50 % einer Anzahl verstanden werden

Unter dem Begriff "Ultraschallsensor" soll im Sinne der Erfindung insbesondere ein Sensor verstanden werden, der zumindest ein ultraschallwandelndes Element und/oder zumindest ein ultraschallabstrahlfähiges Element beinhaltet.

Unter einer "axialen Richtung" soll im Sinne der Erfindung insbesondere eine Richtung verstanden werden, die parallel zu einer Mittelachse des Messrohres angeordnet ist. Unter einem "axialen Bereich" soll im Sinne der Erfindung insbesondere ein Bereich in axialer Richtung verstanden werden. Unter einer "axialen Abmessung" soll im Sinne der Erfindung insbesondere eine Abmessung in axialer Richtung verstanden werden.

Auf diese Weise kann eine Ultraschall-Durchflussmessvorrichtung bereitgestellt werden, bei der eine Schicht des Mediums von einer Füllhöhe des strömenden Mediums im Messrohr, die von einem Fuss einer der der integrierten Stufen bis zum oberen Rand derselben integrierten Stufe reicht, dieselbe Querschnittsfläche aufweist wie eine Schicht des Mediums in dieser Füllhöhe im Messrohr ohne Anwesenheit der integrierten Stufe. Da dies für jede integrierte Stufe der Vielzahl von integrierten Stufen gilt, ist eine Querschnittsfläche des strömenden Mediums für bestimmte Füllhöhen im Messrohr gleich einer Querschnittsfläche des strömenden Mediums bei diesen Füllhöhen ohne Anwesenheit der Vielzahl von integrierten Stufen. Eine annähernde Gleichheit der Querschnittsflächen gilt für beliebige Füllhöhen umso besser, je kleiner eine Höhe der Stufen in vertikaler Richtung ausgebildet ist.

Dadurch kann gewährleistet werden, dass eine Änderung einer räumlichen Geschwindigkeitsverteilung des durch das Messrohr strömenden Mediums im Vergleich zu einem Messrohr ohne integrierte Stufen und in den Stufen angeordnete Ultraschallsensoren zumindest sehr gering gehalten oder sogar so gut wie vermieden werden kann und auf diese Weise Messbedingungen erreichbar sind, die einen geringen systematischen Fehler bei der Bestimmung der Durchflussmenge ermöglichen.

Ein weiterer Vorteil der erfindungsgemässen Ultraschall-Durchflussmessvorrichtung liegt darin, dass in einer geeigneten Ausführungsform Bestimmungen einer Fliessgeschwindigkeit des strömenden Mediums im Messrohr, insbesondere bei teilgefülltem Messrohr, in unterschiedlichen Höhen ermöglicht sind, die den Fliessgeschwindigkeiten in diesen Höhen ohne die Anwesenheit der integrierten Stufen und damit der Ultraschallsensoren entsprechen. Die in den unterschiedlichen Höhen bestimmten Fliessgeschwindigkeiten können für Plausibilitätsbetrachtungen und eine Reduzierung des Messfehlers der Durchflussmessung herangezogen werden.

Die erfindungsgemässe Ultraschall-Durchflussmessvorrichtung ist besonders vorteilhaft bei teilgefüllten, geschlossenen Rohrleitungen anwendbar.

Bevorzugt ist die Rohrquerschnittsfläche kreisringförmig ausgebildet. Die Rohrquerschnittsfläche kann generell von zwei elliptischen Randlinien begrenzt sein, wobei die Kreisringform eine spezielle Ausführungsform mit zwei elliptischen Randlinien darstellt, die von Kreislinien gebildet werden.

In bevorzugten Ausführungsformen der Ultraschall-Durchflussmessvorrichtung sind die ultraschallwandelnden und/oder ultraschallabstrahlfähigen Elemente der Ultraschallsensoren in waagerechter Richtung ausgerichtet an einer Innenwandung des Messrohres und entlang einer Umfangsrichtung und/oder in axialer Richtung des Messrohres voneinander beabstandet angeordnet. Auf diese Weise kann eine Bestimmung eines trotz der Anwesenheit der Ultraschallsensoren ungestörten Geschwindigkeits-Höhenprofils des im Messrohr strömenden Mediums ohne gegenseitige Beeinflussung der Ultraschallsensoren ermöglicht werden.

Bevorzugt sind die ultraschallwandelnden und/oder ultraschallabstrahlfähigen Elemente zumindest eines Paares von Ultraschallsensoren der Vielzahl von Ultraschallsensoren in waagerechter Richtung ausgerichtet und einander gegenüberliegend an der Innenwandung des Messrohres angeordnet. Auf diese Weise kann eine einfach durchführbare Bestimmung des Geschwindigkeits-Höhenprofils des im Messrohr strömenden Mediums nach dem Prinzip der Laufzeitdifferenz erreicht werden.

Wenn die ultraschallwandelnden und/oder ultraschallabstrahlfähigen Elemente der Ultraschallsensoren entlang der Umfangsrichtung derart beabstandet sind, dass in der Umfangsrichtung benachbarte ultraschallwandelnde und/oder ultraschallabstrahlfähige Elemente in einer vertikalen Richtung einen vorbestimmten, gleich grossen gegenseitigen Abstand aufweisen, kann eine Bestimmung eines trotz der Anwesenheit der Ultraschallsensoren ungestörten Geschwindigkeits-Höhenprofils des im Messrohr strömenden Mediums in gleichmässig beabstandeten Höhen des strömenden Mediums ausgeführt werden.

In bevorzugten Ausführungsformen der Ultraschall-Durchflussmessvorrichtung sind die ultraschallwandelnden und/oder ultraschallabstrahlfähigen Elemente der Vielzahl von Ultraschallsensoren in Stufen der Vielzahl von an der Rohrwandung angeordneten, integrierten Stufen in vertikaler Richtung bis zu einer maximalen Höhe angeordnet, die zumindest 75 % eines inneren Durchmessers der Rohrwandung entspricht. Auf diese Weise ist die Bestimmung des ungestörten Geschwindigkeits-Höhenprofils des im Messrohr strömenden Mediums und der Durchflussmenge durch die vorgeschlagene Ultraschall-Durchflussmessvorrichtung in einem weiten Bereich der Durchflusskapazität des Messrohres durchführbar.

Besonders bevorzugt sind die ultraschallwandelnden und/oder ultraschallabstrahlfähigen Elemente der Vielzahl von Ultraschallsensoren in Stufen der Vielzahl von an der Rohrwandung angeordneten, integrierten Stufen in vertikaler Richtung von einem tiefsten Punkt des Messrohres ausgehend bis zu der maximalen Höhe angeordnet. Dadurch ist die Bestimmung der Durchflussmenge des im Messrohr strömenden Mediums durch die vorgeschlagene Ultraschall-Durchflussmessvorrichtung auch bei sehr geringen Durchflussmengen ermöglicht.

Unter dem Begriff "sehr geringe Durchflussmenge" soll im Sinne dieser Erfindung insbesondere eine Durchflussmenge verstanden werden, die weniger als 20 %, bevorzugt weniger als 15 %, und, besonders bevorzugt, weniger als 10 % einer maximalen Durchflusskapazität des Messrohres beträgt.

In bevorzugten Ausführungsformen der Ultraschall-Durchflussmessvorrichtung weisen die an der Rohrwandung angeordneten, integrierten Stufen eine Stufentiefe auf, die von einer maximalen Stufentiefe am Ort des Ultraschallsensors oder der Ultraschallsensoren zu einer minimalen Stufentiefe an Enden des Messrohres stetig abnimmt. Auf diese Weise kann einer Störung einer lokalen Geschwindigkeitsverteilung innerhalb des im Messrohr strömenden Mediums aufgrund der integrierten Stufen besonders effektiv entgegengewirkt werden.

Bevorzugt beträgt die minimale Stufentiefe an Enden des Messrohres im Wesentlichen null. Unter "im Wesentlichen null" soll im Sinne dieser Erfindung insbesondere verstanden werden, dass die minimale Stufentiefe weniger als 20 %, bevorzugt weniger als 15 %, und, besonders bevorzugt, weniger als 10% der maximalen Stufentiefe beträgt. Dadurch kann das im Messrohr strömende Medium besonders störungsfrei an den integrierten Stufen und somit an den Ultraschallsensoren vorbeigeführt werden.

Bevorzugt ist die Stufentiefe von einer maximalen Stufentiefe am Ort des Ultraschallsensors oder der Ultraschallsensoren zu der minimalen Stufentiefe an den Enden des Messrohres streng monoton fallend ausgebildet. Der Begriff "streng monoton fallend" soll im mathematischen Sinne verstanden werden, d. h. bei jeder Veränderung einer Position in axialer Richtung soll die Stufentiefe einen anderen Wert annehmen. Auf diese Weise kann das im Messrohr strömende Medium besonders störungsarm an den integrierten Stufen und somit an den Ultraschallsensoren entlang strömen.

Beispielsweise kann die Stufentiefe von der maximalen Stufentiefe am Ort des Ultraschallsensors oder der Ultraschallsensoren zu der minimalen Stufentiefe an den Enden des Messrohres in linearer Weise abfallen. Die Stufentiefe kann beispielsweise auch derart streng monoton fallend ausgebildet sein, dass die Stufe von der maximalen Stufentiefe bis zu minimalen Stufentiefe eine konvexe oder konkave Krümmung aufweist.

In bevorzugten Ausführungsformen der Ultraschall-Durchflussmessvorrichtung sind die Vorderkanten der Stufen in der Querschnittsfläche aus geraden und kreisbogenförmigen Abschnitten zusammengesetzt darstellbar. Auf diese Weise kann das im Messrohr strömende Medium besonders störungsarm an den integrierten Stufen und somit an den Ultraschallsensoren entlang strömen.

Bevorzugt bestehen die Rohrwandung des Messrohres und die Vielzahl der integrierten Stufen zu einem überwiegenden Anteil aus einem Kunststoffmaterial. Dadurch lassen sich diese Komponenten in gewünschter Masshaltigkeit und auf Material sparende und kostengünstige Weise herstellen. Unter dem Begriff "zu einem überwiegenden Teil" soll im Sinne der Erfindung insbesondere einen Anteil von mehr als 70 Vol.%, bevorzugt von mehr als 80 Vol.% und, besonders bevorzugt, von mehr als 90 Vol.% verstanden werden. Insbesondere soll der Begriff die Möglichkeit einschliessen, dass die genannten Objekte vollständig, d. h. zu 100 Vol.%, aus dem Kunststoffmaterial bestehen.

In bevorzugten Ausführungsformen der Ultraschall-Durchflussmessvorrichtung beträgt ein Verhältnis der axialen Länge des Messrohres zu einer grössten Abmessung des Messrohres senkrecht zur axialen Richtung mindestens 1,5, und eine Mehrheit der Vielzahl von Ultraschallsensoren ist in axialer Richtung in einem mittleren Bereich des Messrohres angeordnet, der eine Länge in axialer Richtung aufweist, die höchstens einer Hälfte der axialen Länge des Messrohres entspricht. Dadurch können innerhalb des Messrohres eine Einlaufstrecke und eine Auslaufstrecke zum Abklingen von vor dem Messrohr in dem strömenden Medium potenziell vorhandenen Störungen einer innerhalb des Messrohres gewünschten Geschwindigkeitsverteilung und zur Vermeidung von Rückwirkungen von potenziell nach dem Messrohr in dem strömenden Medium auftretenden Störungen auf eine innerhalb des Messrohres gewünschte Geschwindigkeitsverteilung bereitgestellt werden.

### Kurze Beschreibung der Figuren

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
Fig. 1 eine schematische Darstellung der Ultraschall-Durchflussmessvorrichtung in einer perspektivischen Ansicht,
Fig. 2 eine schematische Seitenansicht der Ultraschall-Durchflussmessvorrichtung gemäss der Fig. 1 in einem Längsschnitt,
Fig. 3 eine schematische, geschnittene Vorderansicht der Ultraschall-Durchflussmessvorrichtung gemäss der Fig. 1, und
Fig. 4 eine schematische Darstellung eines Ausschnitts der geschnittenen Vorderansicht der Ultraschall-Durchflussmessvorrichtung gemäss der Fig. 1.

In den unterschiedlichen Figuren sind gleiche Teile stets mit denselben Bezugszeichen versehen und werden deshalb in der Regel auch nur einmal beschrieben.

### Beschreibung einer/mehrerer Ausgestaltung(en) der Erfindung

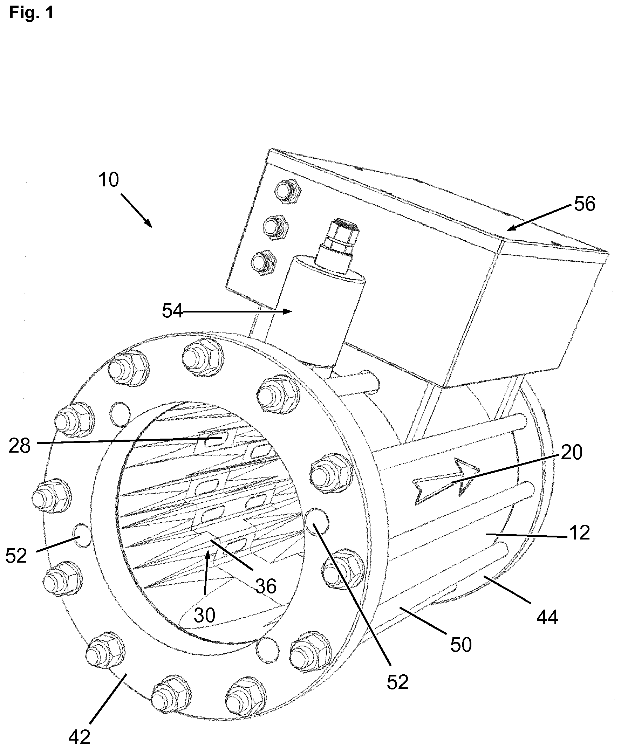

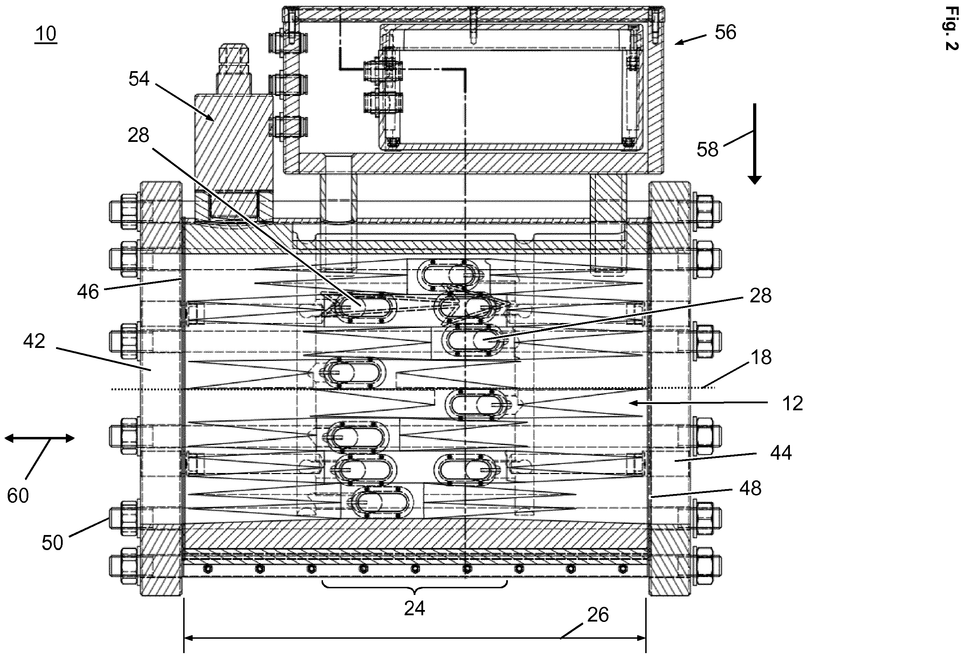

Fig. 1 zeigt eine schematische Darstellung einer möglichen Ausführungsform der erfindungsgemässen Ultraschall-Durchflussmessvorrichtung 10 in einer perspektivischen Ansicht, und Fig. 2 zeigt eine schematische Seitenansicht in Form eines Längsschnitts. Die dargestellte Ausführungsform der Ultraschall-Durchflussmessvorrichtung 10 ist insbesondere für eine Anwendung mit teilgefüllten Rohrleitungen vorgesehen.

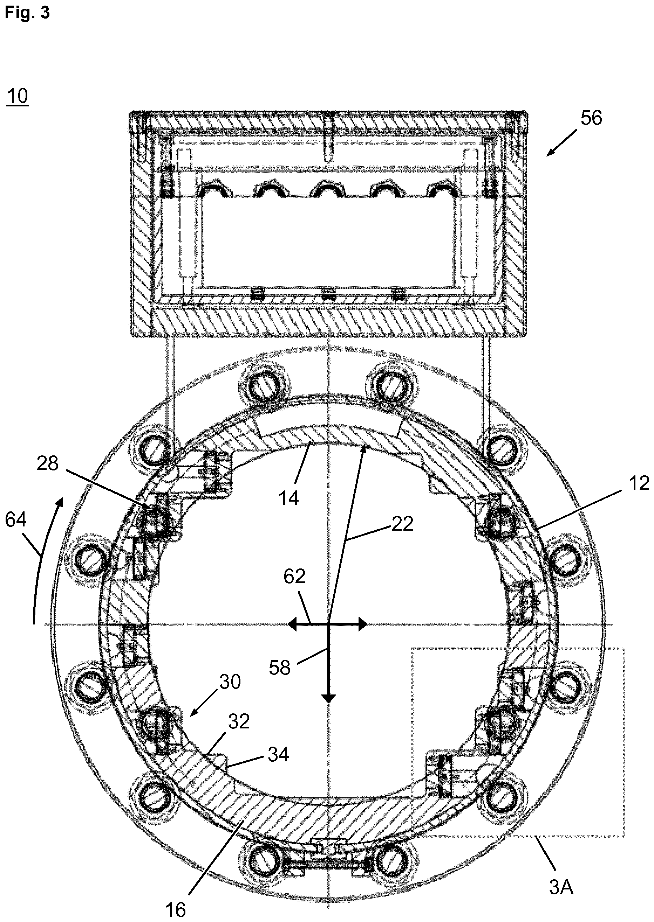

Die Ultraschall-Durchflussmessvorrichtung 10 beinhaltet ein zylindrisches Messrohr 12 mit einer Rohrwandung 14 (Fig. 3), die eine kreisringförmige Rohrquerschnittsfläche 16 aufweist. Ein innerer Durchmesser 22 der zu einem überwiegenden Teil aus einem Kunststoffmaterial bestehenden Rohrwandung 14 beträgt etwa 260 mm. Ein Verhältnis einer in Bezug auf eine Mittelachse 18 (Fig. 2) des Messrohres 12 ermittelbaren axialen Länge 26 des Messrohres 12 zu dem inneren Durchmesser 22 der Rohrwandung 14, der eine grösste Abmessung des Messrohres 12 senkrecht zu einer axialen Richtung 60 darstellt, beträgt mehr als 1,5, nämlich ca. 1,75. In der Fig. 1 ist eine vorgesehene Durchflussrichtung 20 für ein durch das Messrohr 12 strömendes Medium (nicht dargestellt) angezeigt.

In dieser speziellen Ausführungsform der Ultraschall-Durchflussmessvorrichtung 10 ist das zylindrische Messrohr 12 zwischen zwei kreisringförmigen Flanschen 42, 44 angeordnet, wobei zwischen jeder von beiden Stirnseiten des Messrohres 12 und einem der Flansche 42, 44 eine Elastomer-Dichtung 46, 48 vorgesehen ist (Fig. 2). Die Flansche 42, 44 sind in einem betriebsbereiten Zustand der Ultraschall-Durchflussmessvorrichtung 10 durch eine Vielzahl von umfänglich gleichmässig beanstandeten und parallel zur Mittelachse 18 des Messrohres 12 angeordneten Zugankern 50, die als Gewindestangen ausgebildet sind, mit den Elastomer-Dichtungen 46, 48 gegen die beiden Stirnseiten des Messrohres 12 verspannt.

An nach aussen gewandten Stirnflächen sind die Flansche 42, 44 mit einer Vielzahl von Befestigungselementen 52 ausgestattet (Fig. 1). Die Befestigungselemente 52 sind als Gewindebohrungen ausgebildet und dienen zur Befestigung von Rohrleitungen an der Ultraschall-Durchflussmessvorrichtung 10.

Fig. 3 zeigt eine schematische Vorderansicht der Ultraschall-Durchflussmessvorrichtung 10 gemäss der Fig. 1 in einer vorgesehenen Einsatzposition relativ zur vertikalen Richtung 58 und zur waagerechten Richtung 62.

In der Rohrwandung 14 des Messrohres 12 ist eine Vielzahl von zwölf integrierten Stufen 30 angeordnet, die aus dem gleichen Kunststoffmaterial wie die Rohrwandung 14 hergestellt sind und in der vorgesehenen Einsatzposition jeweils eine in Bezug auf die vertikale Richtung 58 oben bzw. unten liegende, waagerecht ausgerichtete Oberseite 32 und eine vertikal ausgerichtete Seitenfläche 34 aufweisen.

Die Ultraschall-Durchflussmessvorrichtung 10 beinhaltet ferner eine Vielzahl von zwanzig Ultraschallsensoren 28. Jeder der Ultraschallsensoren 28 weist ein ultraschallwandelndes und ein ultraschallabstrahlfähiges Element auf.

Die ultraschallwandelnden und ultraschallabstrahlfähigen Elemente aller Ultraschallsensoren 28 der Vielzahl von zwanzig Ultraschallsensoren 28 sind in vertikaler Richtung 58 ausgerichtet und in einer der in der Rohrwandung 14 integrierten zwölf Stufen 30 angeordnet. Die aus der Fig. 2 am besten erkennbar ist, sind alle Ultraschallsensoren 28 der Vielzahl von zwanzig Ultraschallsensoren 28 in der axialen Richtung 60 gesehen in einem mittleren Bereich 24 des Messrohres 12 angeordnet, wobei der mittlere Bereich 24 eine Länge in der axialen Richtung 60 aufweist, die weniger als einer Hälfte, nämlich ca. 40 %, der axialen Länge 26 des Messrohres 12 entspricht.

Wie aus der Fig. 3 ersichtlich ist jede integrierte Stufe 30 der Vielzahl von zwölf integrierten Stufen 30 in der vorgesehenen Einsatzposition derart angeordnet, dass die ultraschallwandelnden und ultraschallabstrahlfähigen Elemente der Ultraschallsensoren 28 in waagerechter Richtung 62 ausgerichtet an einer Innenwandung des Messrohres 12 und entlang einer Umfangsrichtung 64 des Messrohres 12 voneinander beabstandet angeordnet sind.

Die Beabstandung der ultraschallwandelnden und ultraschallabstrahlfähigen Elemente der Ultraschallsensoren 28 entlang der Umfangsrichtung 64 des Messrohres 12 ist derart gewählt, dass in der Umfangsrichtung 28 benachbarte ultraschallwandelnde und ultraschallabstrahlfähige Elemente in der vertikalen Richtung 58 einen vorbestimmten, gleich grossen gegenseitigen Abstand aufweisen (Fig. 2). Dabei sind die integrierten Stufen 30 der Vielzahl von zwölf integrierten Stufen 30 mit den darin angeordneten Ultraschallsensoren 28 der Vielzahl von zwanzig Ultraschallsensoren 28 in vertikaler Richtung 58 von einem tiefsten Punkt des Messrohres bis zu einer maximalen Höhe angeordnet, die annähernd 100 % des inneren Durchmessers 22 der Rohrwandung 14 entspricht (Fig. 3).

In einigen integrierten Stufen 30 der Vielzahl von in der Rohrwandung 14 integrierten Stufen 30 sind zwei der Ultraschallsensoren 28 angeordnet (Fig. 2), die in axialer Richtung 60 des Messrohres 10 voneinander beabstandet sind. Sie können beispielsweise zur Bestimmung der Geschwindigkeit des durch das Messrohr 12 strömenden Mediums nach dem Prinzip der Laufzeitdifferenz eingesetzt werden.

Die in der Fig. 2 angedeuteten zehn Positionen der Ultraschallsensoren 28 sind zu beiden Seiten der Innenwandung des Messrohres 12 vorgesehen, so dass die ultraschallwandelnden und ultraschallabstrahlfähigen Elemente einer Vielzahl von Paaren von Ultraschallsensoren 28 der Vielzahl von Ultraschallsensoren 28 in waagerechter Richtung 62 ausgerichtet und einander gegenüberliegend an der Innenwandung des Messrohres 12 angeordnet sind.

Aus der Anordnung der Ultraschallsensoren 28 innerhalb des Messrohres 12 ergibt sich eine Vielzahl von Möglichkeiten zur Bestimmung der Geschwindigkeit des durch das Messrohr 12 strömenden Mediums, beispielsweise nach dem Prinzip der Laufzeitdifferenz oder dem Doppler-Prinzip. An sich bekannte Methoden zur Bestimmung der Geschwindigkeit des durch das Messrohr 12 strömenden Mediums mit den Ultraschallsensoren 28 sind im Stand der Technik bekannt und müssen daher an dieser Stelle nicht näher beschrieben werden.

Zur Ermittlung einer Füllhöhe des Mediums innerhalb des Messrohres 12 ist ein nach dem Radarprinzip arbeitender Füllstandssensor 54 vorgesehen, der in der Ultraschall-Durchflussmessvorrichtung 10 integriert ist. Zur Ansteuerung der Ultraschallsensoren 28, zur Erfassung von Signalen der Ultraschallsensoren 28 und zur Bestimmung von Geschwindigkeiten des strömenden Mediums aus den Signalen der Ultraschallsensoren 28 weist die Ultraschall-Durchflussmessvorrichtung 10 eine Steuerungs- und Auswerteeinheit 56 auf, die datentechnisch mit den Ultraschallsensoren 28 verbunden ist. Die Steuerungs- und Auswerteeinheit 56 ist ebenfalls mit dem Füllstandssensor 54 datentechnisch verbunden und dazu vorgesehen, Daten des Füllstandssensors 54 auszulesen. Die Steuerungs- und Auswerteeinheit 56 ist weiterhin dazu vorgesehen, aus den verschiedenen bestimmten Geschwindigkeiten des strömenden Mediums und den Daten des Füllstandssensors 54 eine Durchflussmenge des durch das Messrohr 12 strömenden Mediums zu berechnen.

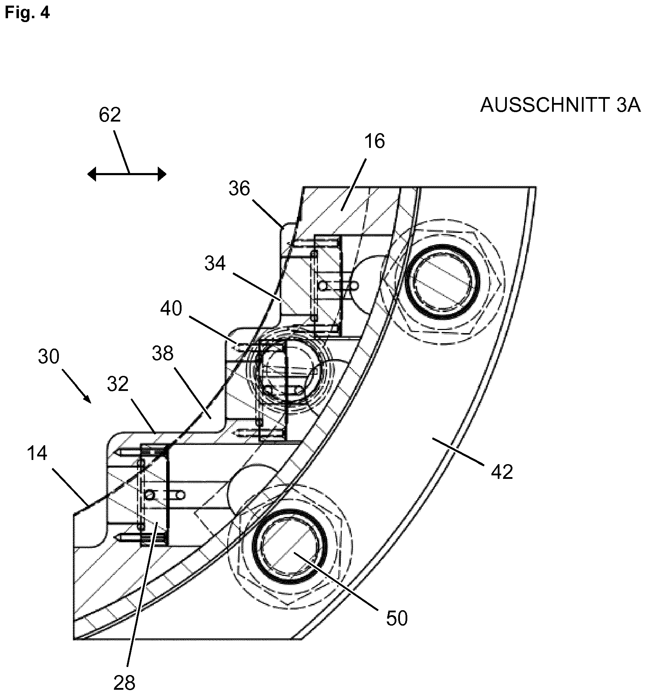

In einem zusammenhängenden axialen Bereich jeder der integrierten Stufen 30, der eine axiale Abmessung des in der jeweiligen Stufe 30 angeordneten Ultraschallsensors 28 oder der in der jeweiligen Stufe 30 angeordneten Ultraschallsensoren 28 umfasst, verlaufen Vorderkanten 36 der jeweiligen integrierten Stufe 30 der Vielzahl von zwölf integrierten Stufen 30 parallel zu einer Mittelachse 18 des Messrohres 12 (Fig. 1 und 4).

Eine Stufentiefe der an der Rohrwandung 14 angeordneten integrierten Stufen 30 ist durch eine Abmessung der Oberseite 32 der jeweiligen integrierten Stufe 30 in waagerechter Richtung 62 gegeben (Fig. 4). Bei jeder der integrierten Stufen 30 ist die Stufentiefe am Ort des Ultraschallsensors 28 oder der Ultraschallsensoren 28 maximal und nimmt bis zu einer minimalen Stufentiefe an Enden des Messrohres 12 stetig und streng monoton fallend, nämlich linear, ab (Fig. 1), wobei die minimale Stufentiefe einen Wert von null hat, d.h. die Vorderkante 36 jeder der integrierten Stufen 30 geht an den Enden des Messrohres 12 stufenlos in die Rohrwandung 14 über.

Wie am deutlichsten in der schematischen Darstellung eines Ausschnitts 3A der geschnittenen Vorderansicht der Ultraschall-Durchflussmessvorrichtung 10 in Fig. 4 erkennbar ist, weist jede der integrierten Stufen 30 der Vielzahl von integrierten Stufen 30 in dem zusammenhängenden axialen Bereich in einer Querschnittsfläche jeweils einen von der Rohrquerschnittsfläche 16 nach innen ragenden Flächenteil 38 und einen von der Rohrquerschnittsfläche 16 nach aussen ragenden Flächenteil 40 auf. Ein Flächeninhalt des nach innen ragenden Flächenteils 38 und ein Flächeninhalt des nach aussen ragenden Flächenteils 40 stimmen betragsmässig überein.

Dabei sind die Vorderkanten 36 der integrierten Stufen 30 in der Querschnittsfläche aus geraden und kreisbogenförmigen Abschnitten zusammengesetzt darstellbar, wodurch das im Messrohr 12 strömende Medium besonders störungsarm an den Vorderkanten 36 der integrierten Stufen 30 vorbeiströmen kann.

Eine Herstellung des Messrohres 12 mit den in der Rohrwandung 14 integrierten Stufen 30 und den in den integrierten Stufen 30 angeordneten Ultraschallsensoren 28 kann beispielsweise dadurch erfolgen, dass in das Messrohr 12 mit der Rohrwandung 14 eine mit Halterungen für die Ultraschallsensoren 28 bestückte Negativform (nicht dargestellt) der integrierten Stufen 30 eingeführt und bis auf eine oder mehrere Einfüllöffnungen und mindestens eine Entlüftungsöffnung nach aussen abgedichtet wird. Anschliessend kann beispielsweise ein von unausgehärtetem Kunstharz gebildetes Kunststoffmaterial in den Zwischenraum zwischen Rohrwandung 14 und Negativform eingebracht werden, so dass nach erfolgtem Aushärten eine stoffschlüssige Verbindung des eingebrachten Kunststoffmaterials mit der Rohrwandung 14 und den Halterungen für die Ultraschallsensoren 28 hergestellt ist. Nach erfolgter Aushärtung kann das Messrohr 12 an den dafür vorgesehenen Halterungen mit den Ultraschallsensoren 28 bestückt werden.

**Zeichenerklärung:**
- 10: Ultraschall-Durchflussmessvorrichtung
- 12: Messrohr
- 14: Rohrwandung
- 16: Rohrquerschnittsfläche
- 18: Mittelachse
- 20: Durchflussrichtung
- 22: innerer Durchmesser
- 24: mittlerer Bereich
- 26: axiale Länge
- 28: Ultraschallsensor
- 30: integrierte Stufe
- 32: Oberseite
- 34: Seitenfläche
- 36: Vorderkante
- 38: nach innen ragender Flächenteil
- 40: nach aussen ragender Flächenteil
- 42: Flansch
- 44: Flansch
- 46: Elastomer-Dichtung
- 48: Elastomer-Dichtung
- 50: Zuganker
- 52: Befestigungselement
- 54: Füllstandssensor
- 56: Steuerungs- und Auswerteeinheit
- 58: vertikale Richtung
- 60: axiale Richtung
- 62: waagerechte Richtung
- 64: Umfangsrichtung

## Patentansprüche

1. Ultraschall-Durchflussmessvorrichtung (10), beinhaltend
- ein Messrohr (12) mit einer Rohrwandung (14), die eine Rohrquerschnittsfläche (16) aufweist,
- eine Vielzahl von Ultraschallsensoren (28), wobei
- ultraschallwandelnde und/oder ultraschallabstrahlfähige Elemente der Ultraschallsensoren (28) mehrheitlich in vertikaler Richtung (58) ausgerichtet und in einer Vielzahl von in der inneren Rohrwandung (14) integrierten Stufen (30) angeordnet sind, wobei Vorderkanten (36) der Stufen (30) in einem zusammenhängenden axialen Bereich, der zumindest eine axiale Abmessung des Ultraschallsensors (28) oder der Ultraschallsensoren (28) umfasst, parallel zu einer Mittelachse (18) des Messrohres (12) verlaufen, **dadurch gekennzeichnet, dass**
- eine Mehrzahl der integrierten Stufen (30) zumindest in dem zusammenhängenden axialen Bereich in einer Querschnittsfläche jeweils einen von der Rohrquerschnittsfläche (16) nach innen ragenden Flächenteil (38) und einen von der Rohrquerschnittsfläche (16) nach aussen ragenden Flächenteil (40) aufweist, deren Flächeninhalte im Wesentlichen betragsmässig übereinstimmen.

2. Ultraschall-Durchflussmessvorrichtung (10) nach Anspruch 1, wobei die ultraschallwandelnden und/oder ultraschallabstrahlfähigen Elemente der Ultraschallsensoren (28) in waagerechter Richtung (62) ausgerichtet an einer Innenwandung des Messrohres (12) und entlang einer Umfangsrichtung (64) und/oder in axialer Richtung (60) des Messrohres (12) voneinander beabstandet angeordnet sind.

3. Ultraschall-Durchflussmessvorrichtung (10) nach Anspruch 1 oder 2, wobei die ultraschallwandelnden und/oder ultraschallabstrahlfähigen Elemente zumindest eines Paares von Ultraschallsensoren (28) der Vielzahl von Ultraschallsensoren (28) in waagerechter Richtung (62) ausgerichtet und einander gegenüberliegend an der Innenwandung des Messrohres (12) angeordnet sind.

4. Ultraschall-Durchflussmessvorrichtung (10) nach einem der vorhergehenden Ansprüche, wobei die ultraschallwandelnden und/oder ultraschallabstrahlfähigen Elemente der Ultraschallsensoren (28) entlang der Umfangsrichtung (64) derart beabstandet sind, dass in der Umfangsrichtung (64) benachbarte ultraschallwandelnde und/oder ultraschallabstrahlfähige Elemente in einer vertikalen Richtung (58) einen vorbestimmten, gleich grossen gegenseitigen Abstand aufweisen.

5. Ultraschall-Durchflussmessvorrichtung (10) nach einem der vorhergehenden Ansprüche, wobei die ultraschallwandelnden und/oder ultraschallabstrahlfähigen Elemente der Vielzahl von Ultraschallsensoren (28) in den integrierten Stufen (30) der Vielzahl von an der Rohrwandung (14) angeordneten, integrierten Stufen (30) in vertikaler Richtung (58) von einem tiefsten Punkt des Messrohres (12) bis zu einer maximalen Höhe angeordnet sind, die zumindest 75 % eines inneren Durchmessers (22) der Rohrwandung (14) entspricht.

6. Ultraschall-Durchflussmessvorrichtung (10) nach einem der vorhergehenden Ansprüche, wobei die an der Rohrwandung (14) angeordneten, integrierten Stufen (30) eine Stufentiefe aufweisen, die von einer maximalen Stufentiefe am Ort des Ultraschallsensors (28) oder der Ultraschallsensoren (28) bis zu einer minimalen Stufentiefe an Enden des Messrohres (12) stetig abnimmt.

7. Ultraschall-Durchflussmessvorrichtung (10) nach Anspruch 6, wobei die minimale Stufentiefe an den Enden des Messrohres (12) im Wesentlichen null beträgt.

8. Ultraschall-Durchflussmessvorrichtung (10) nach Anspruch 6 oder 7, wobei die Stufentiefe von einer maximalen Stufentiefe am Ort des Ultraschallsensors (28) oder der Ultraschallsensoren (28) zu der minimalen Stufentiefe an den Enden des Messrohres (12) streng monoton fallend ausgebildet ist.

9. Ultraschall-Durchflussmessvorrichtung (10) nach einem der vorhergehenden Ansprüche, wobei die Vorderkanten (36) der integrierten Stufen (30) in der Querschnittsfläche aus geraden und kreisbogenförmigen Abschnitten zusammengesetzt darstellbar sind.

10. Ultraschall-Durchflussmessvorrichtung (10) nach einem der vorhergehenden Ansprüche, wobei die Rohrwandung (14) des Messrohres (12) und die Vielzahl der integrierten Stufen (30) zu einem überwiegenden Anteil aus einem Kunststoffmaterial bestehen.

11. Ultraschall-Durchflussmessvorrichtung (10) nach einem der vorhergehenden Ansprüche, wobei ein Verhältnis der axialen Länge (26) des Messrohres (12) zu einer grössten Abmessung des Messrohres (12) senkrecht zur axialen Richtung (60) mindestens 1,5 beträgt und eine Mehrheit der Vielzahl von Ultraschallsensoren (28) in axialer Richtung (60) in einem mittleren Bereich (24) des Messrohres (12) angeordnet ist, der eine Länge in axialer Richtung (60) aufweist, die höchstens einer Hälfte der axialen Länge (26) des Messrohres (12) entspricht.

## Claims

1. An ultrasound flow measurement apparatus (10) including
- a measuring tube (12) with a tube wall (14) which has a tube cross-sectional area (16),
- a plurality of ultrasound sensors (28),
- the majority of ultrasound-converting and/or ultrasound emission-capable elements of the ultrasound sensors (28) being aligned in the vertical direction (58) and arranged in a plurality of steps (30) integrated in the internal tube wall (14), with front edges (36) of the steps (30) extending parallel to a centre axis (18) of the measuring tube (12) in a contiguous axial region which comprises at least one axial dimension of the ultrasound sensor (28) or ultrasound sensors (28),
**characterised in that**,
- at least in the contiguous axial region, a plurality of the integrated steps (30) in each case have in a cross-sectional area a subarea (38) projecting inwards from the tube cross-sectional area (16) and a subarea (40) projecting outwards from the tube cross-sectional area (16), the areas of which subareas substantially match in size.

2. An ultrasound flow measurement apparatus (10) according to claim 1, wherein the ultrasound-converting and/or ultrasound emission-capable elements of the ultrasound sensors (28) are aligned in the horizontal direction (62) with an internal wall of the measuring tube (12) and are spaced from one another along a circumferential direction (64) and/or in an axial direction (60) of the measuring tube (12).

3. An ultrasound flow measurement apparatus (10) according to claim 1 or claim 2, wherein the ultrasound-converting and/or ultrasound emission-capable elements of at least one pair of ultrasound sensors (28) of the plurality of ultrasound sensors (28) are aligned in the horizontal direction (62) and arranged opposite one another on the internal wall of the measuring tube (12).

4. An ultrasound flow measurement apparatus (10) according to one of the preceding claims, wherein the ultrasound-converting and/or ultrasound emission-capable elements of the ultrasound sensors (28) are spaced along the circumferential direction (64) in such a manner that ultrasound-converting and/or ultrasound emission-capable elements adjacent one another in the circumferential direction (64) are identically mutually spaced from one another by a predetermined distance in a vertical direction (58).

5. An ultrasound flow measurement apparatus (10) according to one of the preceding claims, wherein the ultrasound-converting and/or ultrasound emission-capable elements of the plurality of ultrasound sensors (28) are arranged in the integrated steps (30) of the plurality of integrated steps (30) arranged on the tube wall (14) in a vertical direction (58) from a lowest point of the measuring tube (12) up to a maximum height which corresponds to at least 75% of an internal diameter (22) of the tube wall (14).

6. An ultrasound flow measurement apparatus (10) according to one of the preceding claims, wherein the integrated steps (30) arranged on the tube wall (14) have a step depth which constantly declines from a maximum step depth at the location of the ultrasound sensor (28) or ultrasound sensors (28) down to a minimum step depth at the ends of the measuring tube (12).

7. An ultrasound flow measurement apparatus (10) according to claim 6, wherein the minimum step depth at the ends of the measuring tube (12) substantially amounts to zero.

8. An ultrasound flow measurement apparatus (10) according to claim 6 or claim 7, wherein the step depth is of strictly monotonically declining configuration from a maximum step depth at the location of the ultrasound sensor (28) or ultrasound sensors (28) to the minimum step depth at the ends of the measuring tube (12).

9. An ultrasound flow measurement apparatus (10) according to one of the preceding claims, wherein the front edges (36) of the integrated steps (30) in the cross-sectional area can be represented as being composed of linear and circular arc-shaped portions.

10. An ultrasound flow measurement apparatus (10) according to one of the preceding claims, wherein the tube wall (14) of the measuring tube (12) and the plurality of integrated steps (30) predominantly consist of a plastics material.

11. An ultrasound flow measurement apparatus (10) according to one of the preceding claims, wherein a ratio of the axial length (26) of the measuring tube (12) to the greatest dimension of the measuring tube (12) perpendicular to the axial direction (60) amounts to at least 1.5 and a majority of the plurality of ultrasound sensors (28) are arranged in an axial direction (60) in a central region (24) of the measuring tube (12), which region has a length in the axial direction (60) which corresponds to at most half the axial length (26) of the measuring tube (12).

## Revendications

1. Dispositif de mesure de débit à ultrasons (10) pourvu
- d'un tube de mesure (12) comprenant une paroi de tube (14) qui présente une section transversale de tube (16),
- une pluralité de capteurs à ultrasons (28),
dans lequel des éléments transducteurs d'ultrasons et/ou capables d'émettre des ultrasons des capteurs à ultrasons (28) sont alignés en majorité dans le sens vertical (58) et sont disposés dans une pluralité de gradins (30) intégrés dans la paroi de tube (14) intérieure, dans lequel des arêtes avant (36) des gradins (30), dans une zone axiale continue, qui comprend au moins une dimension axiale du capteur à ultrasons (28) ou des capteurs à ultrasons (28), sont parallèles à un axe médian (18) du tube de mesure (12),
**caractérisé en ce**
- **qu'**une majorité des gradins (30) intégrés présente au moins dans la zone axiale continue dans une section transversale respectivement une partie de surface (38) faisant saillie vers l'intérieur depuis la section transversale de tube (16) et une partie de surface (40) faisant saillie vers l'extérieur depuis la section transversale de tube (16), dont les superficies coïncident essentiellement du point de vue de la grandeur.

2. Dispositif de mesure de débit à ultrasons (10) selon la revendication 1, dans lequel les éléments transducteurs d'ultrasons et/ou capables d'émettre des ultrasons des capteurs à ultrasons (28) sont alignés dans le sens horizontal (62) contre une paroi intérieure du tube de mesure (12) et disposés à distance l'un de l'autre le long d'un sens périphérique (64) et/ou dans le sens axial (60) du tube de mesure (12).

3. Dispositif de mesure de débit à ultrasons (10) selon la revendication 1 ou 2, dans lequel les éléments transducteurs d'ultrasons et/ou capables d'émettre des ultrasons d'au moins une paire de capteurs à ultrasons (28) de la pluralité de capteurs à ultrasons (28) sont alignés dans le sens horizontal (62) et sont disposés opposés entre eux contre la paroi intérieure du tube de mesure (12).

4. Dispositif de mesure de débit à ultrasons (10) selon l'une des revendications précédentes, dans lequel les éléments des capteurs à ultrasons (28) transducteurs d'ultrasons et/ou capables d'émettre des ultrasons sont espacés le long du sens périphérique (64) de sorte que des éléments transducteurs d'ultrasons et/ou capables d'émettre des ultrasons adjacents dans le sens périphérique (64) présentent dans un sens vertical (58), un écart opposé prédéfini de taille égale.

5. Dispositif de mesure de débit à ultrasons (10) selon l'une des revendications précédentes, dans lequel les éléments transducteurs d'ultrasons et/ou capables d'émettre des ultrasons de la pluralité de capteurs à ultrasons (28) sont disposés dans les gradins (30) intégrés de la pluralité de gradins (30) intégrés disposés contre la paroi de tube (14) dans le sens vertical (58) d'un point le plus bas du tube de mesure (12) jusqu'à une hauteur maximale qui correspond à 75 % d'un diamètre intérieur (22) de la paroi de tube (14).

6. Dispositif de mesure de débit à ultrasons (10) selon l'une des revendications précédentes, dans lequel les gradins (30) intégrés disposés contre la paroi de tube (14) présentent une profondeur de gradin qui décroît en continu d'une profondeur de gradin maximale à l'endroit du capteur à ultrasons (28) ou des capteurs à ultrasons (28) jusqu'à une profondeur de gradin minimale aux extrémités du tube de mesure (12).

7. Dispositif de mesure de débit à ultrasons (10) selon la revendication 6, dans lequel la profondeur de gradin minimale aux extrémités du tube de mesure (12) est essentiellement de zéro.

8. Dispositif de mesure de débit à ultrasons (10) selon la revendication 6 ou 7, dans lequel la profondeur de gradin est formée en tombant de manière strictement monotone d'une profondeur de gradin maximale à l'endroit du capteur à ultrasons (28) ou des capteurs à ultrasons (28) jusqu'à la profondeur de gradin minimale aux extrémités du tube de mesure (12).

9. Dispositif de mesure de débit à ultrasons (10) selon l'une des revendications précédentes, dans lequel les arêtes avant (36) des gradins (30) intégrés dans la section transversale peuvent être représentés comme étant composés de tronçons droits et en arc de cercle.

10. Dispositif de mesure de débit à ultrasons (10) selon l'une des revendications précédentes, dans lequel la paroi de tube (14) du tube de mesure (12) et la pluralité des gradins (30) intégrés sont constitués en majeure partie d'un matériau plastique.

11. Dispositif de mesure de débit à ultrasons (10) selon l'une des revendications précédentes, dans lequel un rapport de la longueur axiale (26) du tube de mesure (12) à une dimension la plus grande du tube de mesure (12) perpendiculairement au sens axial (60) est au moins de 1,5 et une majorité de la pluralité de capteurs à ultrasons (28) est disposée dans le sens axial (60) dans une partie centrale (24) du tube de mesure (12) qui présente une longueur dans le sens axial (60) qui correspond au plus à une moitié de la longueur axiale (26) du tube de mesure (12).
